# FASCICULE DE BREVET EUROPEEN

(11) **EP 0 859 142 B1**
(45) Date de publication et mention de la délivrance du brevet: **13.08.2003**
(21) Numéro de dépôt: 98400324.4
(22) Date de dépôt: 12.02.1998
(51) Int. Cl.: F02K 1/68

(54) **Inverseur de poussée pour turbosoufflante à trés grand taux de dilution**
Schubumkehrvorrichtung für Turbonantriebwerk mit hohem Nebenstromverhältnis
Thrust reverser for high by-pass ratio turbofan

(30) Priorité: 13.02.1997 FR 9701655
(43) Date de publication de la demande: 19.08.1998
(73) Titulaire: SNECMA MOTEURS, 75015 Paris (FR)
(72) Inventeur: Brossier, Pascal Noel, 77127 Lieusaint (FR); Pabion, Philippe Jean-Pierre, 77350 Le Mee Sur Seine (FR)

(56) Documents cités:
- FR-A- 1 479 131
- FR-A- 2 625 261
- FR-A- 2 650 861
- GB-A- 2 254 882
- US-A- 3 985 319

## Description

La présente invention concerne un inverseur de poussée pour turbosoufflante à très grand taux de dilution.

Dans ce type de turboréacteur comprenant un canal primaire de circulation des gaz dits de flux chaud constituant une veine principale d'éjection et un canal annulaire, coaxial au canal primaire, où circulent des gaz dits de flux froid, à la sortie, par exemple, d'une soufflante située à l'entrée du turboréacteur, et constituant une veine secondaire d'éjection, l'inversion de poussée met en oeuvre principalement ou uniquement la déviation du flux secondaire, et ceci. particulièrement lorsque le taux de dilution est élevé.

Il est connu dans ces applications d'utiliser des éléments déplaçables ou obstacles susceptibles en position déployée de former un ensemble annulaire continu qui obture ledit canal secondaire de manière à dévier le flux secondaire et à orienter les nappes du flux en procurant une inversion de poussée. Lors du fonctionnement en poussée directe, par contre, lesdits obstacles doivent être rétractés et escamotés en laissant libre et dégagé le canal secondaire pour la circulation du flux secondaire. Dans certains types connus d'inverseur de poussée, lesdits obstacles sont ainsi escamotés dans la paroi radialement externe du canal secondaire.

D'autres solutions prévoient d'escamoter lesdits obstacles au niveau de la paroi radialement interne du canal secondaire ou paroi enveloppant la partie interne ou centrale du moteur. Des solutions de ce type sont notamment décrites par FR-A-1 479 131. Diverses améliorations ont été proposées par FR-A-2 625 261 ou par FR-A-2 650 861.

Ainsi, FR-A-2 650 861 montre des obstacles formés de volets supérieurs et inférieurs articulés l'un sur l'autre et se déployant radialement en aval de la nacelle. En position rétradée, les volets sont escamotés dans l'épaisseur du capot primaire.

Toutefois des problèmes subsistent pour l'adaptation d'un inverseur de poussée de ce type à un groupe motopropulseur à très grand taux de dilution, en tenant compte des conditions d'installation sur avion et notamment de la réduction de masse, tout en évitant d'augmenter l'encombrement du moteur au niveau de son diamètre extérieur et de la garde au sol à respecter. L'inverseur de poussée doit également assurer avec efficacité les performances requises d'inversion ainsi que, lors du fonctionnement en poussée directe, une paroi interne aérodynamiquement continue sans introduire de perturbations dommageables dans les écoulements. Un des buts de l'invention est aussi d'obtenir une simplicité de définition facilitant la réalisation et la maintenance, notamment en permettant la dépose du moteur de base sans démontage de l'inverseur.
Un autre but de l'invention est d'améliorer la sécurité de manière à obtenir un escamotage des obstacles de l'inverseur, la position déployée des obstacles n'étant pas maintenue en cas d'incident sur le système de commande des déplacements des obstacles.
Dans un inverseur de poussée du type précité répondant à ces conditions, en outre la structure fixe d'inverseur est composée d'une virole interne en deux demi-parties, isolant l'inverseur, portant une bride avant en U de liaison, un cadre intermédiaire radial et des nervures longitudinales reliant le cadre, la bride et la virole, un premier ensemble de volets est articulé sur des chapes fixées sur ledit cadre, un second ensemble de volets est articulé au moyen d'axes sur le premier ensemble, des volets suiveurs assurent l'étanchéité entre les volets du premier ensemble en position déployée, chaque volet du premier ensemble est déployé sous l'action d'un vérin fixé sur ladite virole interne et chaque volet du second ensemble entraîné par le volet associé du premier ensemble prend sa position déployée sous l'action d'une biellette de synchronisation, logée à l'intérieur du premier volet et disposée entre ladite chape et le second volet.

D'autres caractéristiques et avantages de l'invention seront mieux compris à la lecture de la description qui va suivre d'un mode de réalisation de l'invention, en référence aux dessins annexés sur lesquels :
- la figure 1 montre, selon une demi-vue schématique en coupe longitudinale par un plan passant par l'axe de rotation du moteur, une turbosoufflante du type à très grand taux de dilution installée sous l'aile de l'avion et comportant un inverseur de poussée conforme à un mode de réalisation de l'invention dans un fonctionnement à poussée directe, la position schématique des éléments déplaçables lors du fonctionnement en inversion de poussée étant représentée en traits fins ;
- la figure 2 montre selon une vue de détail agrandie de la figure 1 l'inverseur de poussée mis en place sur le corps central de moteur dans une position de fonctionnement en jet direct ;
- la figure 3 représente selon une vue partielle en coupe transversale suivant la ligne III-III de la figure 2 l'inverseur de poussée représenté sur la figure 2, la position ouverte de la demi-coquille d'inverseur étant représentée en traits fins ;
- la figure 4 montre selon une vue de détail agrandie analogue à celle de la figure 2 l'inverseur de poussée dans une position de fonctionnement en inversion de poussée ;
- la figure 5 montre selon une vue schématique en perspective une demi-partie de structure fixe de l'inverseur de poussée représenté sur les figures 1 à 4 ;
- la figure 6 montre selon une vue schématique en perspective, vue de l'avant de la turbosoufflante, une demi-partie de l'inverseur représenté sur la figure 4 ;
- la figure 7 montre selon une vue analogue à celle de la figure 6, vue de l'arrière de la turbosoufflante, une demi-partie de l'inverseur représenté sur la figure 4.

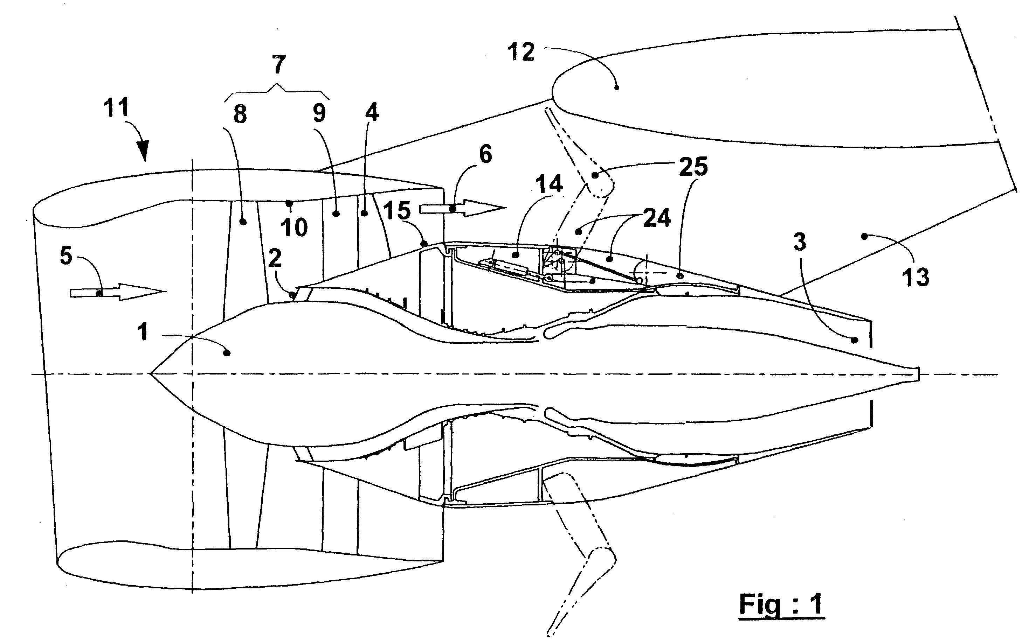

La figure 1 montre un exemple de moteur aéronautique du type turbosoufflante à très grand taux de dilution auquel est appliqué un mode de réalisation de l'inverseur de poussée conforme à l'invention. La turbosoufflante comprend un moteur de base 1 du type turboréacteur en position centrale dont seuls les contours schématiques sont représentés sur la figure 1, entre une entrée 2 du canal primaire de la veine de circulation des gaz et une sortie 3 et le principe de fonctionnement et les éléments constitutifs étant bien connus en soi ne seront pas décrits plus en détails. Un canal annulaire 4 est ménagé autour dudit moteur de base 1 et constitue un canal secondaire de circulation de flux dit flux secondaire ou flux froid, symbolisé par une flèche 5 à l'entrée et une flèche 6 à la sortie, après passage à travers une soufflante 7 comportant au moins un étage d'aubes mobiles 8 de compression et un étage de redresseur d'aubes fixes 9. Le canal secondaire 4 est en outre délimité par une paroi radialement externe 10 qui est intégrée à une nacelle 11 qui peut dans ce cas être très courte de manière à procurer un gain significatif sur la masse et sur la traînée aérodynamique de l'ensemble propulsif. Dans l'exemple représenté sur la figure 1, la turbosoufflante est installée sous l'aile 12 d'un avion en étant supportée de manière connue en soi par un système de suspension 13 comportant notamment un mât ou pylône de liaison. La configuration représentée sur la figure 1 correspond à un fonctionnement en poussée directe, une partie de la poussée, la plus importante dans le cas d'un grand taux de dilution, étant procurée par le flux 6 sortant à l'arrière du canal secondaire 4.

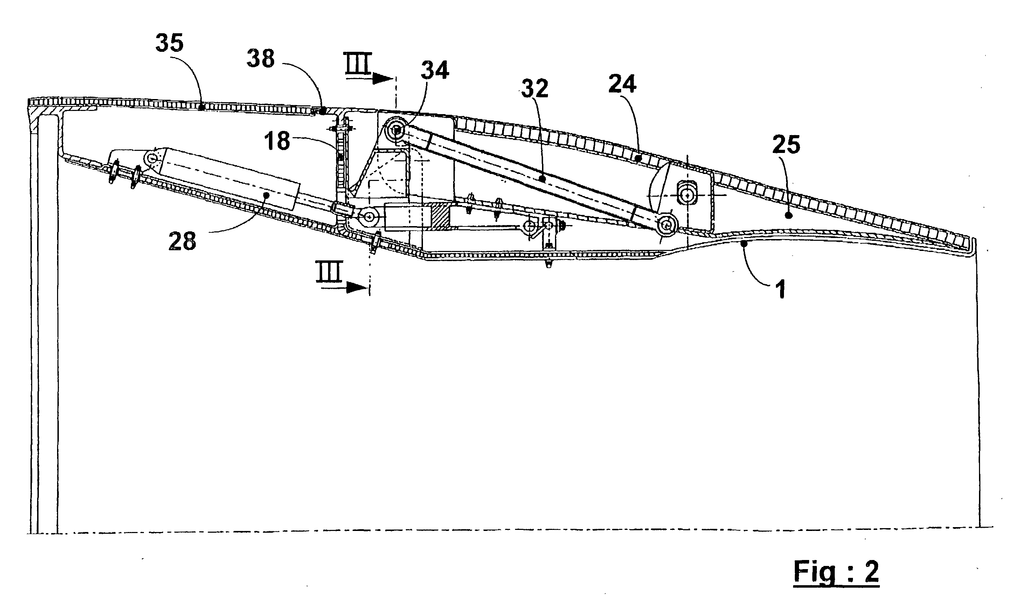

Afin de permettre dans les phases requises un freinage de l'avion, ladite turbosoufflante est équipée d'un dispositif inverseur de poussée 14 dont les détails de la réalisation conforme à l'invention sont représentés sur les figures 2, 3 et 4.

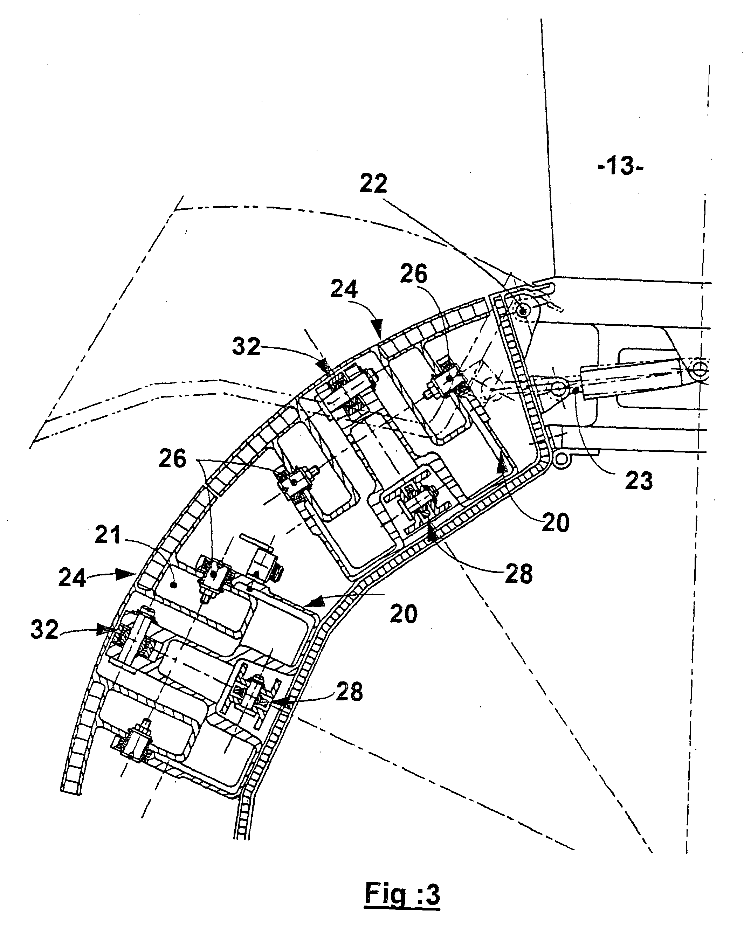

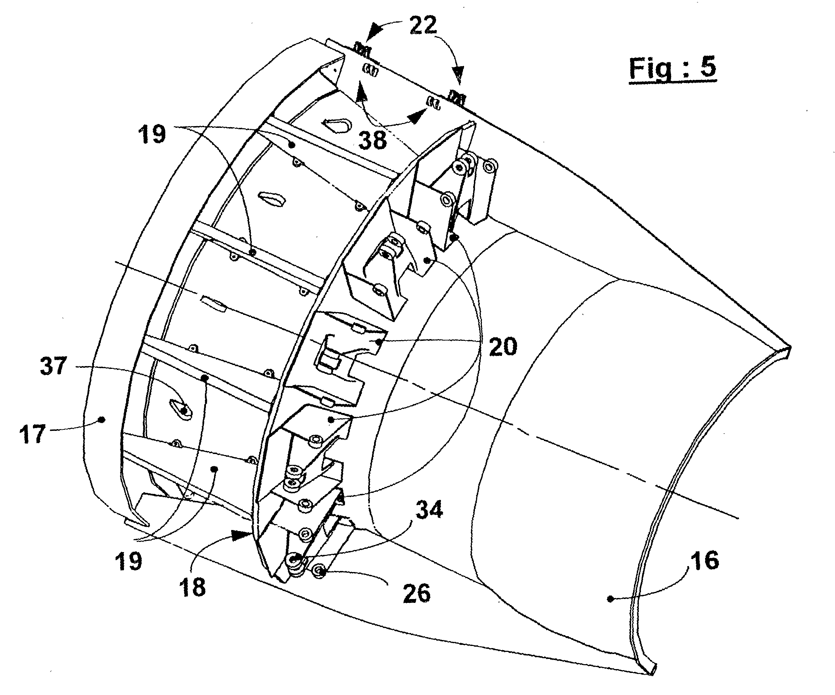

Dans la position escamotée, représentée sur les figures 1, 2 et 3 et correspondant au fonctionnement en poussée directe, les éléments de l'inverseur de poussée 14 sont logés à l'intérieur d'une enveloppe externe 15 qui entoure le corps central du moteur de base 1 de la turbosoufflante et constitue la paroi radialement interne du canal 4 de circulation de la veine de flux secondaire 6.
La structure fixe de l'inverseur 14 telle que représentée sur la figure 5 est composée d'une virole interne 16 en deux demi-parties, solidarisée à son extrémité amont avec une bride avant 17 à section en U qui assure la liaison avec la partie amont de l'enveloppe 15 de moteur. La virole 16 porte également un cadre intermédiaire radial 18 et des nervures longitudinales 19 régulièrement réparties et reliant le cadre 18, la bride 17 et la virole 16. Une pluralité de chapes 20 sont en outre fixées sur la virole 16 et le cadre 18. L'inverseur 14 est réalisé en deux demi-coquilles 21 dont l'une est partiellement représentée sur la figure 3. La demi-coquille 21, dans l'exemple représenté, est articulée en partie haute sur un axe 22 solidaire du mât ou pylône 13 de suspension à l'avion. Une biellette 23 de longueur variable assure l'ouverture des demi-coquilles 21 dans la position représentée en traits fins sur la figure 3. Un verrouillage reliant les deux demi-coquilles 21 est prévu dans la partie basse.

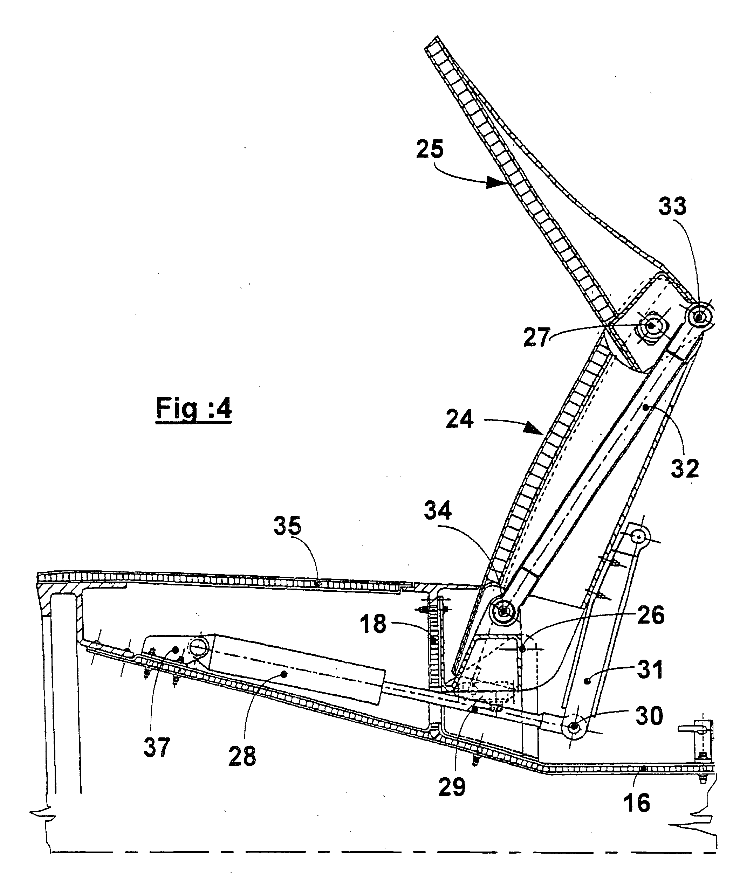

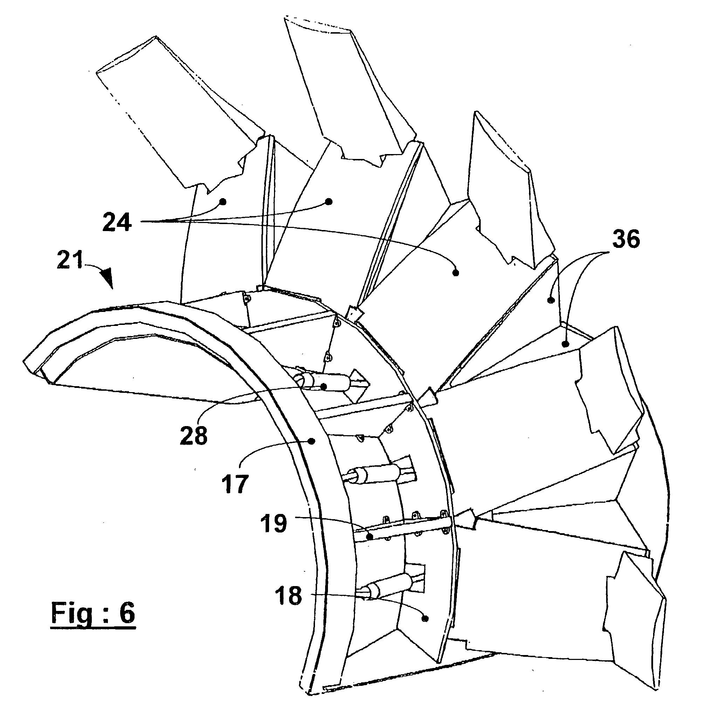

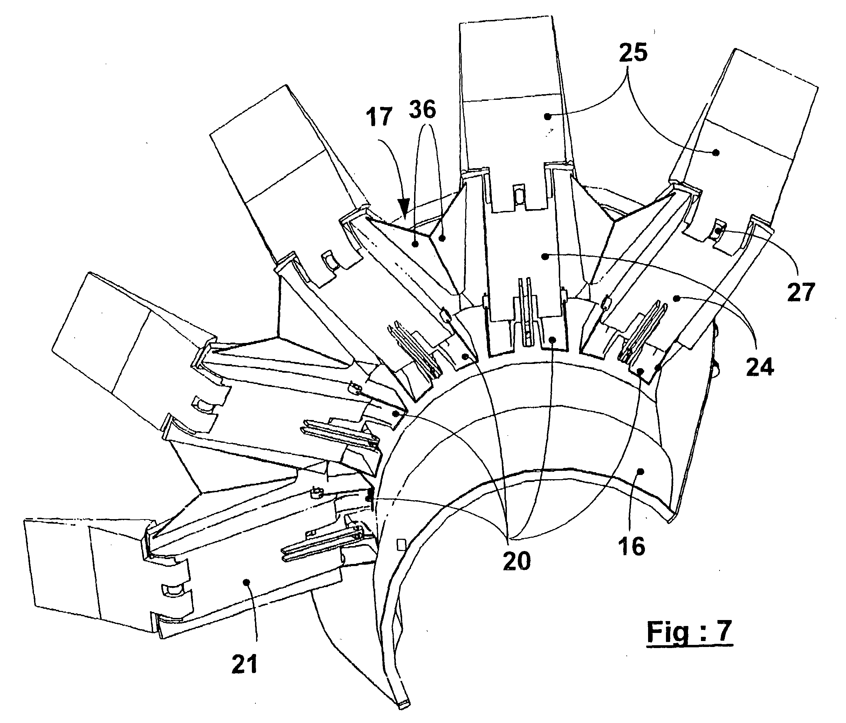

Lors d'un fonctionnement en inversion de poussée, comme représenté sur la figure 4 et en traits fins sur la figure 1, les éléments déplaçables de l'inverseur, constituant des obstacles de déviation du flux secondaire 6 sont déployés à l'arrière du canal annulaire 4. Lesdits obstacles sont constitués par un premier ensemble annulaire de volets 24 et un second ensemble annulaire de volets 25. Les premiers volets 24 sont articulés sur les chapes 20 de la structure fixe au niveau d'articulation 26 et les seconds volets 25 sont articulés sur le premiers volets 24 au moyen d'axes 27. Par paire de premier volet 24 et de second volet 25, les déplacements sont obtenus grâce à un système de commande composé d'un vérin 28 supporté au moyen d'une chape 37 sur la virole 16 de structure fixe, et la tige 29 de vérin est articulée en 30 sur un support 31 solidarisé au premier volet 24. La position du second volet 25 par rapport à son axe de rotation 27 est déterminée par une biellette 32 articulée à une extrémité 33 sur le second volet 25 et à son autre extrémité 34 sur la chape fixe 20. La biellette 32 est logée à l'intérieur du premier volet 24 et elle forme une diagonale du quadrilatère formé par les quatre points d'articulation respectifs des volets et de la bielle, 26, 34, 27 et 33, de manière à obtenir une rotation de chaque volet dans le même sens en déplaçant l'extrémité aval du volet dans la direction amont, amont et aval étant définis par rapport au sens normal de circulation des gaz de la turbosoufflante. Lors d'un fonctionnement en jet direct, comme représenté sur les figures 1 et 2, les premiers volets 24 et seconds volets 25 forment avec l'enveloppe externe 15 du moteur de base une paroi aérodynamiquement continue à profil optimisé. La virole 16 isole l'inverseur de poussée 14 et le compartiment du moteur de base. Un capotage 35 articulé sur un axe 38 à l'avant du cadre 18 permet l'accès éventuel aux vérins 28.
Selon l'exemple de réalisation représenté sur les figures 6 et 7, chaque demi-coquille 21 de l'inverseur de poussée 14 comporte cinq paires de premier volet 24 et de second volet 25. L'étanchéité entre deux premiers volets 24 adjacents dans la position déployée est assurée au moyen d'une paire de volets suiveurs 36 à bords articulés. Quatre paires de volets suiveurs 36 respectivement disposés entre les premiers volets 24 sont utilisés dans l'exemple représenté sur les figures 6 et 7.
L'inverseur de poussée 14 réalisé conformément à l'invention satisfait les objectifs visés et permet notamment d'obtenir une réduction de la traînée aérodynamique de l'ensemble propulsif tout en assurant un gain de masse sur l'ensemble. La sécurité en cas d'incident sur le système de commande des déplacements des volets mobiles est améliorée du fait qu'en plaçant les chambres des vérins 28 au niveau de la basse pression du circuit, les premiers 24 et second volets 25 s'escamotent sous l'effet des efforts aérodynamiques exercés par le flux en prenant la position correspondant au fonctionnement en jet direct.

Par ailleurs, les dispositions d'ouverture des deux demi-coquilles 21 facilitent beaucoup les opérations de maintenance, notamment en permettant l'entretien du moteur sans opération de dépose complète ou partielle de l'inverseur de poussée.

## Revendications

1. Inverseur de poussée de turbosoufflante à très grand taux de dilution comportant des éléments déplaçables ou volets s'escamotant, en position de poussée directe, à l'intérieur d'une enveloppe (15) et, en outre, se déployant, sous l'action de moyens de commande à vérins disposés à l'intérieur de ladite enveloppe, de manière à constituer des obstacles formant un ensemble annulaire de déviation du flux secondaire en procurant une inversion de poussée dans lequel la structure fixe d'inverseur est composée d'une virole interne (16) en deux demi-parties, isolant l'inverseur (14) portant une bride (17) avant en U de liaison, un cadre (18) intermédiaire radial et des nervures (19) longitudinales reliant le cadre (18), la bride (17) et la virole (16), un premier ensemble de volets (24) est articulé sur des chapes (20) fixées sur lesdits cadre (18) et virole (16), un second ensemble de volets (25) est articulé au moyen d'axes (27) sur le premier ensemble, des volets suiveurs (36) assurent l'étanchéité entre les volets (24) du premier ensemble en position déployée, chaque volet (24) du premier ensemble est déployé sous l'action d'un vérin (28) fixé sur ladite virole interne (16) et chaque volet (25) du second ensemble entraîné par le volet associé (24) du premier ensemble prend sa position déployée sous l'action d'une biellette (32) de synchronisation, logée à l'intérieur du premier volet (24) et disposée entre ladite chape (20) et le second volet (25).

2. Inverseur de poussée de turbosoufflante selon la revendication 1 **caractérisé en ce que** ladite biellette de synchronisation (32) forme une diagonale du quadrilatère dont les quatre sommets correspondent respectivement aux deux points d'articulation (33, 34) de la biellette au point d'articulation (27) entre un premier (24) et un second volet (25) associés et au point d'articulation (26) du premier volet (24) sur la structure fixe.

3. Inverseur de poussée de turbosoufflante selon la revendication 2 **caractérisé en ce que** les chambres des vérins (28) sont placées au niveau de la basse pression du circuit de commande de manière que les volets (24, 25) en cas d'incident sur le système de commande ont tendance à s'escamoter sous l'effet des efforts aérodynamiques exercés par le flux sur les volets (24, 25).

4. Inverseur de poussée de turbosoufflante selon l'une quelconque des revendications 1 à 3 **caractérisé en ce qu'**il est formé de deux demi-coquilles (21) respectivement articulées en zone haute sur un axe (22) solidaire d'une suspension (13) et reliées en zone basse par un système de verrouillage.

5. Inverseur de poussée de turbosoufflante selon l'une quelconque des revendications 1 à 4 **caractérisé en ce que** les vérins de commande (28) sont disposés dans une zone amont par rapport au cadre intermédiaire (18) de structure et un capotage amovible (35) rétablit dans ladite zone amont la continuité de l'enveloppe (15) d'inverseur.

6. Inverseur de poussée de turbosoufflante selon l'une quelconque des revendications 1 à 5 **caractérisé en ce que** chaque demi-coquille (21) d'inverseur comporte cinq paires de premier (24) et second volets (25) et quatre paires de volets suiveurs (36)

## Patentansprüche

1. Schubumkehrvorrichtung für ein Turbotriebwerk mit hohem Nebenstromverhältnis, bestehend aus bewegbaren Elementen oder Klappen, die im Direktstrahlbetrieb ins Innere einer Hülle (15) einfahren und sich ferner unter Einwirkung von Steuermitteln mit Zylindern, die im Inneren dieser Hülle angeordnet sind, dergestalt ausklappen, dass sie Hindernisse bilden, die eine ringförmige Gesamtanordnung zur Umlenkung des Mantelstroms bilden und dabei eine Schubumkehr bewirken, bei der der feste Aufbau der Schubumkehrvorrichtung aus einem Innenring (16) mit zwei Hälften besteht, der die Schubumkehrvorrichtung (14) isoliert, an welcher ein U-förmiger Verbindungsflansch (17), ein radialer Zwischenrahmen (18) und Längsrippen (19) sitzen, wobei letztere den Rahmen (18), den Flansch (17) und den Ring (16) miteinander verbinden, bei der eine erste Gesamtanordnung von Klappen (24) an Gabelgelenken (20) angelenkt ist, die an dem genannten Rahmen (18) und Ring (16) befestigt sind, bei der eine zweite Gesamtanordnung von Klappen (25) mittels Achsen (27) an der ersten Gesamtanordnung angelenkt ist, bei der Nachlaufklappen (36) die Dichtigkeit zwischen den Klappen (24) der ersten Gesamtanordnung in ausgeklappter Stellung gewährleisten, bei der jede Klappe (24) der ersten Gesamtanordnung unter der Einwirkung eines an dem genannten Innenring (16) befestigten Zylinders (28) ausgeklappt wird, und jede Klappe (25) der zweiten Gesamtanordnung, die von der zugehörigen Klappe (24) der ersten Gesamtanordnung betätigt wird, ihre ausgeklappte Stellung unter der Einwirkung einer Synchronisations-Verbindungsstange (32) einnimmt, welche im Inneren der ersten Klappe (24) Aufnahme findet und zwischen dem genannten Gabelgelenk (20) und der zweiten Klappe (25) angeordnet ist.

2. Schubumkehrvorrichtung für ein Turbotriebwerk nach Anspruch 1,
**dadurch gekennzeichnet,**
**dass** die Synchronisations-Verbindungsstange (32) eine Diagonale des Vierecks bildet, dessen vier Ecken den beiden Gelenkpunkten (33 und 34) der Verbindungsstange, dem Gelenkpunkt (27) zwischen einer ersten Klappe (24) und einer mit dieser verbundenen zweiten Klappe (25) bzw. dem Gelenkpunkt (26) der ersten Klappe (24) an dem festen Aufbau entsprechen.

3. Schubumkehrvorrichtung für ein Turbotriebwerk nach Anspruch 2,
**dadurch gekennzeichnet,**
**dass** die Kammern der Zylinder (28) im Niederdruckbereich des Steuerkreislaufs angeordnet sind, so dass die Klappen (24, 25) bei einem Störfall an dem Steuersystem die Tendenz haben, sich unter der Einwirkung der aerodynamischen Kräfte, die von dem Strom auf die Klappen (24, 25) ausgeübt werden, einzuklappen.

4. Schubumkehrvorrichtung für ein Turbotriebwerk nach einem der Ansprüche 1 bis 3,
**dadurch gekennzeichnet,**
**dass** sie aus zwei Halbschalen (21) gebildet ist, die jeweils oben an einer Achse (22) angelenkt sind, die mit einer Aufhängung (13) fest verbunden ist, und unten durch ein Verriegelungssystem verbunden sind.

5. Schubumkehrvorrichtung für ein Turbotriebwerk nach einem der Ansprüche 1 bis 4,
**dadurch gekennzeichnet,**
**dass** die Steuerzylinder (28) in einem vorderen Bereich gegenüber dem Zwischenrahmen (18) des Aufbaus angeordnet sind und eine abnehmbare Verkleidung (35) in diesem vorderen Bereich die Kontinuität der Hülle (15) der Schubumkehrvorrichtung herstellt.

6. Schubumkehrvorrichtung für ein Turbotriebwerk nach einem der Ansprüche 1 bis 5,
**dadurch gekennzeichnet,**
**dass** jede Halbschale (21) der Schubumkehrvorrichtung fünf Paare von ersten Klappen (24) und zweiten Klappen (25) sowie vier Paare von Nachlaufklappen (36) aufweist.

## Claims

1. High bypass ratio turbofan thrust reverser comprising moveable elements or flaps retracting, in the direct thrust position, into a casing (15) and furthermore deploying, under the action of ram-type control means arranged inside the said casing, in such a way as to constitute obstacles forming an annular assembly that deflects the bypass flow, affording thrust reversal, in which the reverser fixed structure is made up of an internal case ring (16) in two half-parts, isolating the reverser (14) bearing a U-shaped front flange (17) for connection, a radial intermediate frame (18) and longitudinal ribs (19) connecting the frame (18), the flange (17) and the case ring (16), a first set of flaps (24) is articulated to yokes (20) fixed on the said frame (18) and case ring (16), a second set of flaps (25) is articulated by means of pins (27) to the first set, follower flaps (36) make the seal between the flaps (24) of the first set in the deployed position, each flap (24) of the first set is deployed under the action of a ram (28) fixed on the said internal case ring (16) and each flap (25) of the second set, driven by the associated flap (24) of the first set, adopts its deployed position under the action of a synchronization link rod (32) housed inside the first flap (24) and arranged between the said yoke (20) and the second flap (25).

2. Turbofan thrust reverser according to Claim 1, **characterized in that** the said synchronization link rod (32) forms a diagonal of the quadrilateral the four corners of which correspond respectively to the two points of articulation (33, 34) of the link rod to the point of articulation (27) between an associated first (24) and an associated second (25) flap, and to the point of articulation (26) of the first flap (24) on the fixed structure.

3. Turbofan thrust reverser according to Claim 2, **characterized in that** the chambers of the rams (28) are at the low pressure of the control circuit so that, in the event of an incident affecting the control system, the flaps (24, 25) have a tendency to retract under the effect of the aerodynamic forces exerted by the flow on the flaps (24, 25).

4. Turbofan thrust reverser according to any one of Claims 1 to 3, **characterized in that** it is formed of two half-shells (21) articulated respectively in an upper region on a pin (22) secured to a suspension (13) and are connected in a lower region by a latching system.

5. Turbofan thrust reverser according to any one of Claims 1 to 4, **characterized in that** the control rams (28) are arranged in an upstream region with respect to the intermediate frame (18) of the structure and a removable cowling (35) reestablishes the continuity of the reverser casing (15) in the said upstream region.

6. Turbofan thrust reverser according to any one of Claims 1 to 5, **characterized in that** each reverser half-shell (21) has five pairs of first (24) and second (25) flaps and four pairs of follower flaps (36).
